# EUROPÄISCHE PATENTANMELDUNG

(11) **EP 0 063 261 A2**
(43) Veröffentlichungstag der Anmeldung: **27.10.1982**
(21) Anmeldenummer: 82102588.9
(22) Anmeldetag: 27.03.1982
(51) Int. Cl.: C09B 44/02, D06P 1/08, D21H 3/80

(54) **Kationische Azofarbstoffe, ihre Herstellung und Verwendung**

(30) Priorität: 08.04.1981 DE 3114075
(71) Anmelder: BAYER AG, 51368 Leverkusen (DE)
(72) Erfinder: Nickel, Horst, Dr., D-5090 Leverkusen (DE); Wild, Peter, Dr., D-6305 Alten Buseck (DE)

(57) **Zusammenfassung**

Kationische Azofarbstoffe der allgemeinen Formel 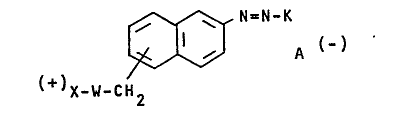 worin
X⁽⁺⁾ eine Ammoniumgruppe,
W eine direkte Bindung oder ein Brückenglied,
K einen Rest einer phenolischen, enolisierten oder enolisierbaren Kupplungskomponente oder einen Rest einer Kupplungskomponente der Aminobenzol- oder Aminonaphthalinreihe und
A⁽⁻⁾ ein Anion bedeuten.

## Beschreibung

Gegenstand der Erfindung sind kationische, wasserlösliche Azofarbstoffe der allgemeinen Formel 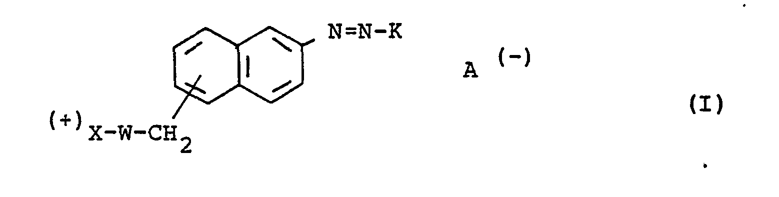 worin
X⁽⁺⁾ eine Ammoniumgruppe,
W. eine direkte Bindung oder ein Brückenglied,
K einen Rest einer phenolischen, enolisierten oder enolisierbaren Kupplungskomponente oder einen Rest einer Kupplungskomponente der Aminobenzol- oder Aminonaphthalinreihe und
A⁽⁻⁾ ein Anion bedeuten, ihre Herstellung und ihre Verwendung zum Färben kationisch anfärbbarer Materialien, insbesondere Papier.

Unter der Ammoniumgruppe X⁽⁺⁾ wird insbesondere eine Gruppe der Formel 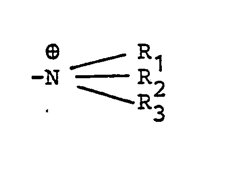 verstanden, worin
R₁,R₂ und R₃ unabhängig voneinander C₁- bis C₄-Alkyl, C₃- oder C₄-Alkenyl, Benzyl oder Phenylethyl, die durch Hydroxy, C₁- bis C₄-Alkoxy, Halogen oder Cyan und der Benzyl- und Phenylethylrest zusätzlich durch C₁- bis C₄-Alkyl substituiert sein können, außerdem Wasserstoff oder
R₁ und R₂ zusammen mit dem Stickstoffatom, an das sie gebunden sind, einen 5- oder 6- gliedrigen Ring, oder
R₁,R₂ und R₃ zusammen mit dem Stickstoffatom, an das sie gebunden sind, einen 6-gliedrigen Ring bedeuten.
R1und R₂ bilden zusammen mit dem Stickstoffatom beispielsweise einen gegebenenfalls durch C₁-C₄-Alkyl substituierten Piperidin-, Morpholin-, Piperazin- oder Pyrrolin-Ring, und R₁, R₂ und R₃ bilden zusammen mit dem Stickstoffatom beispielsweise einen gegebenenfalls durch C₁-C₄-Alkyl substituierten Pyridin-Ring.
_{W} steht vorzugsweise für den Rest W₁, der eine direkte Bindung oder ein Brückenglied, das über das N-Atom an die Methylengruppe von (I) gebunden ist, der Formel 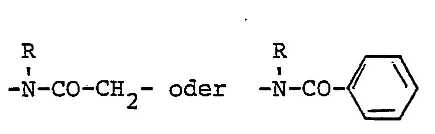
mit R = Wasserstoff oder C₁-C₄-Alkyl darstellt.

Geeignete Reste K sind beispielsweise solche von Kupplungskomponenten der Hydroxybenzol-, Aminobenzol-, Aminonaphthalin-, Hydroxynaphthalin-, Pyrazolon-, Pyrazol-, Acetessigsäurearylamid- und Pyridon-Reihe.

Die Reste K können für Azofarbstoffe übliche Substituenten enthalten, beispielsweise Sulfonsäure-, Carbonsäure-, gegebenenfalls substituierte Sulfonamid-, Sulfon-, Alkylamino-, Aralkyl-amino-, Arylamino-, Acylamino-, Nitro-, Cyan-, Hydroxy-, Alkoxy-, Azo- oder Ammoniumgruppen oder Halogenatome wie Fluor, Chlor oder Brom.

Als Anion A⁽⁻⁾ kommen übliche farblose organische und anorganische Anionen beispielsweise Chlorid, Bromid, Jodid, Hydroxyl, Hydrogensulfat, Sulfat, Nitrat, Dihydrogenphosphat, Hydrogenphosphat, Phosphat, Carbonat, Methosulfat, Ethosulfat, Acetat, Propionat, Benzolsulfonat und Toluolsulfonat in Betracht.

Das Anion ist im allgemeinen durch das Herstellungsverfahren gegeben. Vorzugsweise liegen die Chloride, Hydrogensulfate, Sulfat, Methosulfate oder Acetate vor. Die Anionen können in bekannter Weise gegen andere Anionen ausgetauscht werden.

### Bevorzugt steht der Rest

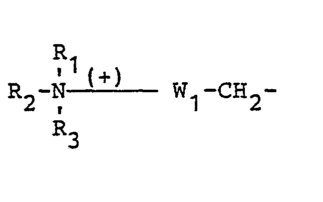

in der 5-Stellung des Naphthalinringes.

Unter einer phenolischen Kupplungskomponente KH werden beispielsweise verstanden: 1-_{H}ydroxy-4-methylnaphthalin, 2-Hydroxynaphthalin, 1- oder 2-Acetyl- oder -Mesyl-, Benzyl-, Chlorbenzoyl-, Tosyl- amino-7-hydroxynaphthalin, 1,5-Dihydroxynaphthalin, 1-_{H}ydroxy-5-acetyl- oder -5-benzoyl-amino-naphthalin, 8-_{H}ydroxy-chinolin, Citrazinsäuremethyl- oder -ethylester, 1-Hydroxy-3- oder -4-sulfonaphthalin-betaine, wobei die basische oder kationische Gruppe zur Betain-Bildung im zweiten Naphthalinkern vzw. in der 6- oder 7-Stellung direkt oder über eine Acylamino- oder Triazinylaminogruppe gebunden ist. Beispielhaft seien angeführt das Betain der Formel 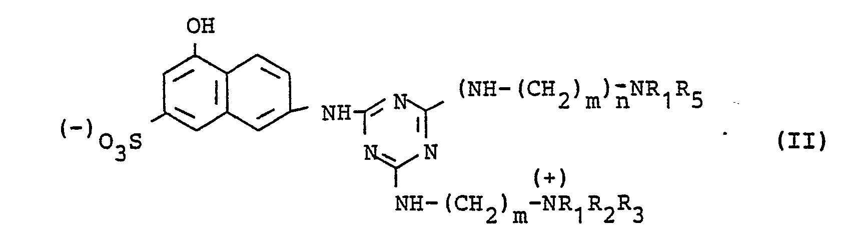 worin _{.}
R₁,R₂ und R₃ die obige Bedeutung haben,
R₅ für R₂ und außerdem für gegebenenfalls durch Chlor, C₁-C₄-Alkyl oder C₁-C₄-Alkoxy substituiertes Phenyl,
m für 2 oder 3 und
n für 0 oder 1 stehen, und insbesondere das Betain der Formel II, worin m für 3 und n für 0 stehen.

Unter einer enolischen Kupplungskomponente KH werden beispielsweise verstanden:
Acetessigarylide mit Arylresten vzw. der Benzol- und Naphthalin-Reihe wie Acetessig-anilid, -toluidid, -o-anisid, -xylidid, -2-methoxy-5-chlor-anilid, Bis- acetoacetyl-1,4- oder -1,3-phenylendiamid, Chloracetessigo-anisid, Acetessig-1-naphthylamid und Acetessigarylide der Formel 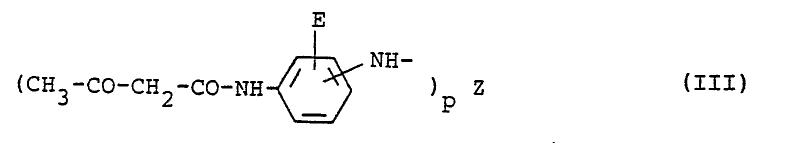 mit E = H, CH₃, OCH₃, Cl p = 1 oder 2 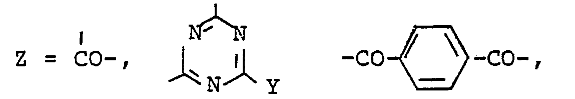 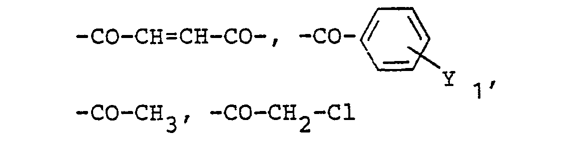
_{Y} = Halogen, Hydroxy, NR₁R₅, NH-(CH₂)ₘ-NR₁R₂R₃
Y₁ = H, Halogen, NR₁R₅, NR₁R₂R₃, C₁-C₄-Alkyl, ^{C}₁-^{C}₄-Alkoxy,

Pyrazolone, vzw. 1-Arylpyrazolone wie 1-Phenyl-3-methyl-oder -3-carboxymethyl-pyrazolon, die im Phenylkern substituiert sein können durch Methyl, Methoxy, Chlor, Acetyl-oder Benzoylamino, Ureido sowie 1-Phenyl-3-methyl-5-amino- pyrazol, Barbitursäure, 5-Cyanimino-barbitursäure.

Unter einer Kupplungskomponente KH der Aminobenzol-oder Aminonaphthalinreihe werden beispielsweise verstanden: Anilin, 2- oder 3-Methylanilin, 2- oder 3-Methoxyanilin, 3-Amino-4-methoxy-toluol, 1-Aminonaphthalin, 1-Amino-2-methoxy oder ethoxynaphthalin, 3-Acetylaminoanilin oder 1,3-Phenylendiamin.

Die mit den Anilin-Kupplungskomponenten erhaltenen Monoazoverbindungen z.B. 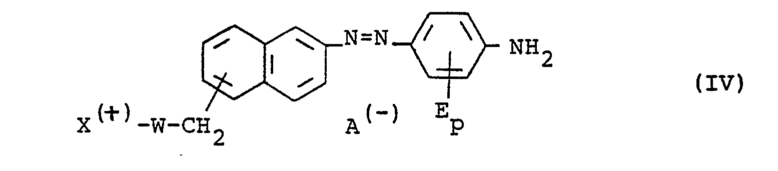 können weiterdiazotiert und vzw. mit phenolischen Kupplungskomponenten KH (siehe oben) zum Disazofarbstoff gekuppelt werden. Auch ist eine weitere Umsetzung z.B. mit Acylierungsmitteln möglich (s.w.unten).

Hervorzuheben sind Farbstoffe der Formel (V) - (IX). 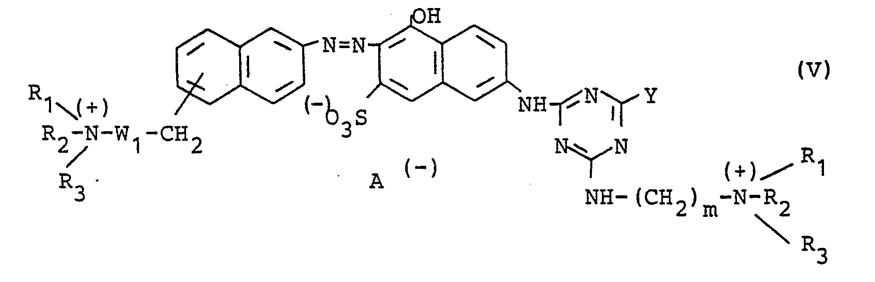 worin die Symbole die vorstehend genannte Bedeutung haben; bevorzugt davon sind Farbstoffe mit y = NR₁R₅ und m = 3; 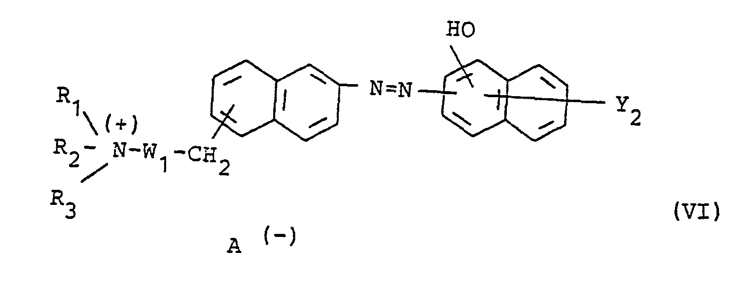 worin die Azo- und Hydroxygruppe in Nachbarstellung zueinander stehen,
Y₂ für Wasserstoff, Acetylamino, gegebenenfalls durch Chlor oder Methyl substituiertes Benzoylamino, Benzolsulfonylamino oder Mesylamino steht,
und die übrigen Symbole die vorstehend genannte Bedeutung haben; 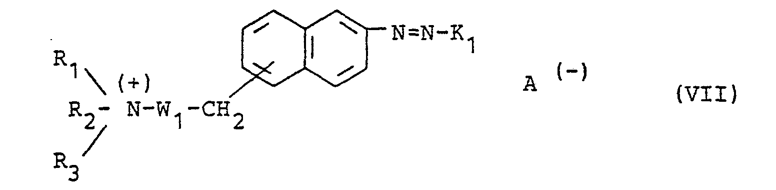 worin
K₁ den Rest einer enolischen Kupplungskomponente der Acetessigsäure-, Pyridon- oder Pyrazolon-Reihe darstellt, und von den Farbstoffen der Formel (VII) die Farbstoffe der Formel 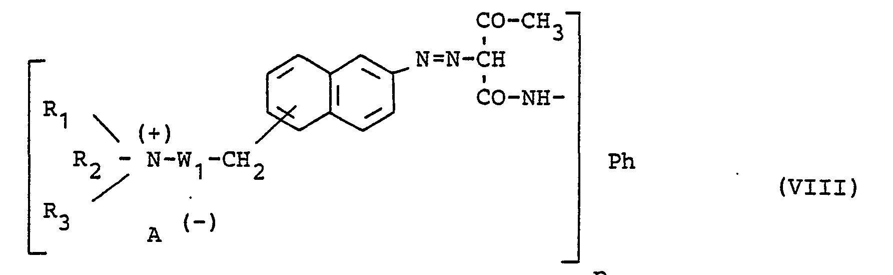 worin
Ph einen gegebenenfalls durch C₁-C₄-Alkyl, C₁-C₄-Alkoxy, Halogen, Acetylamino oder Chloracetylamino substituierten 1- oder 2-wertigen Benzol-, Naphthalin-oder Diphenyl-Rest oder einen Rest der Formel 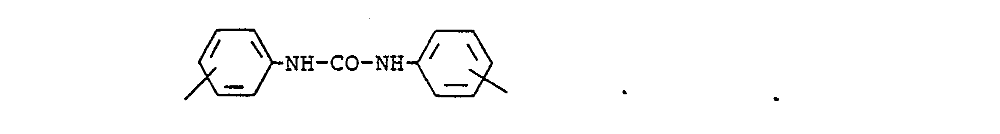 darstellt, und worin die übrigen Symbole die vorstehend genannte Bedeutung haben; 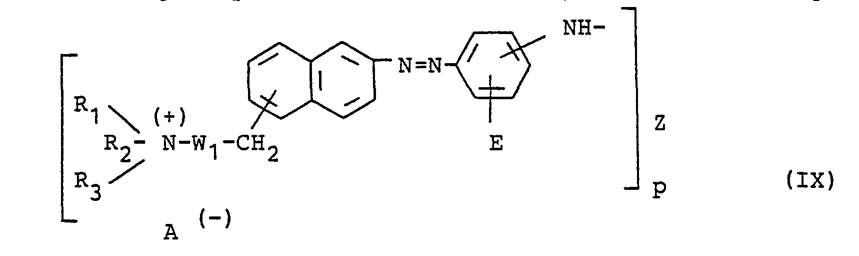 worin die Symbole die vorstehend genannte Bedeutung haben.

In den Formeln (V) - (IX) steht W₁ vorzugsweise für eine direkte Bindung.

Zur Einführung des Restes Z kommen z.B. in Betracht: Phosgen, 2,4-Dichlor-6-amino-triazin (1,3,5), Fumarsäuredichlorid, Terephthalsäuredichlorid, Benzoylchlorid, 4-Dimethylamino- oder 4-Trimethylammonium-benzoylchlorid, Chloracetylchlorid, 3- oder 4-Acetylaminobenzoylchlorid, 3- oder 4-Chloracetylaminobenzöylchlorid.

Die Farbstoffe werden in bekannter Weise durch Kuppeln von Diazoniumverbindungen der Formel 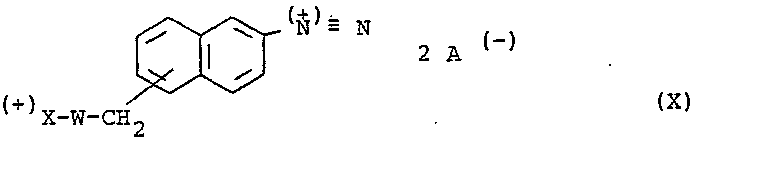 mit Kupplungskomponenten KH hergestellt, wobei das wäßrige und/oder organische Medium des Kupplungsansatzes der Art der Kupplungskomponente (saure oder alkalische Kupplung) angepaßt wird.

An die Kupplung kann sich eine in der Azochemie übliche Folgereaktion anschließen; beispielsweise seien erwähnt Verseifung, Kondensation, Reduktion, wobei z.B. die oben erwähnten Acylierungsmittel zum Einsatz kommen.

Die erhaltenen Farbstoffe werden in üblicher Weise isoliert oder das Herstellungsverfahren wird so geleitet, daß sofort eine gebrauchsfertige konzentrierte Farbstoff- lösung erhalten wird.

Wird der Farbstoff isoliert, so erfolgt entweder Trocknung oder aus der isolierten Farbstoff-Paste wird direkt die gewünschte Farbstoff-Lösung hergestellt.

Die Farbstoffe werden zum Färben von mit kationischen Farbstoffen färbbaren Materialien verwendet. Genannt seien beispielsweise: Polyacrylnitril, sauer modifizierte Polyester, z.B. Polyglykolterephthalate, wie sie in der belgischen Patentschrift 549 179 oder US~ Patentschrift 2 893 816, beschrieben werden, sauer modifizierte Polyamide, tannierte vegitabilische Fasern (Baumwolle), Leder und vorzugsweise Papier. Geeignet sind die Farbstoffe zum Färben von geleimtem sowie ungeleimtem Papier, wobei von gebleichtem oder ungebleichtem Zellstoff ausgegangen werden kann und Laub-oder Nadelholz-Zellstoff wie Birken- und/oder Kiefern-Sulfit und/oder Sulfat-Zellstoff verwendet werden kann.

Die Farbstoffe werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, -phosphat, -chlorid, -acetat in Gegenwart von Entstaubungsmitteln eingestellt, oder die Farbstoffe werden als Sprühtrocknungspräparationen in den Handel gebracht. Konzentrierte Farbstofflösungen können wäßriger oder wäßrig/organischer Art sein, wobei übliche, umweltfreundliche und möglichst gut abbaubare Zusätze bevorzugt werden wie organische Säuren, vorzugsweise Essigsäure, Ameisensäure, Amide wie Formamid, Dimethylformamid, Harnstoff, Alkohole wie Glykol, Diglykol, Diglykolether, vorzugsweise dessen Methyl- oder Ethylether.

Die Farbstoffe besitzen ein ausgezeichnetes Ziehvermögen und sehr gute Allgemein-Echtheiten. Papierfärbungen zeichnen sich durch sehr gute Naßechtheiten sowie Alaun-, Säure- und Alkali-Echtheit aus. Sie besitzen eine überraschend hohe Lichtechtheit bei gleichzeitig hoher Klarheit und Farbstärke.

Bei den in den Beispielen mit "I.Nr." gekennzeichneten Nummern handelt es sich um Farbtonangaben nach "Colour Index Hue Indication Chart".

### Beispiel 1

Die salzsaure Lösung von 0,1 Mol 2-Aminonaphthalin-5-methyltrimethylammonium-chlorid (Volumen 70 Teile) wird nach Zugabe von etwa 100 Teilen Eis mit 24 Teilen 30 %iger wäßriger Natriumnitrit-Lösung bei 0°C diazotiert. Kurz vor dem Kuppeln wird überschüssige salpetrige Säure mit Amidosulfonsäure zerstört.

20,7 g (0,1 Mol) Acetoacetyl-(2-Methoxy-anilid) werden mit 125 Teilen Wasser und 12 Teilen 40 %iger Natronlauge bei Raumtemperatur gelöst, mit etwa 100 Teilen Eis versetzt und durch Zutropfen von 50 %iger Essigsäure auf pH 5 gestellt, wobei die Kupplungskomponente ausfällt. Man gibt 140 Teile 20 %ige Natriumacetat-Lösung zu und läßt nun bei 0° die bereitete Diazoniumsalzlösung langsam zulaufen (ca. 1/2 Stunde) und rührt bei pH 4-4,5 bis die Kupplung beendet ist (Nachweis-Reagenz für die Diazoniumverbindung ist eine alkalische 1 %ige ß-Naphthol-Lösung). Nach beendeter Kupplung wird der Farbstoff durch Filtration isoliert. Die erhaltene Farbstoff-Paste wird entweder getrocknet oder zur Lösung verarbeitet.

Der getrocknete Farbstoff stellt ein gelbes Pulver dar, das sich in Wasser mit gelber Farbe löst. Man erhält beispielsweise eine konzentrierte Farbstofflösung, indem man die erhaltene Farbstoff-Paste in 85 Teilen 50 %iger Essigsäure oder Ameisensäure bei etwa 50°C löst, filtriert und auf Raumtemperatur abkühlen läßt.

Das Farbstoffpulver bzw. die konzentrierte Lösung färben geleimtes wie ungeleimtes Papier in klaren, grünstichig gelben Tönen (I.Nr. 1). Die gefärbten Papiere besitzen sehr gute Lichtechtheit.

Verwendet man als Kupplungskomponente anstelle des 2-Methoxy-acetessiganilid die äquimolare Menge der nachfolgend aufgeführten Acetessiganilide, so erhält man grünstichig gelbe kationische Farbstoffe (I.Nr. 1):
Acetessig-anilid
Acetessig-O-toluidid
Acetessig-p-toluidid
Acetessig-xylidid-2,4 oder -2,5
Acetessig-p-anisidid
Acetessig-2-methoxy-5-methyl-anilid
Acetessig-2-methyl-5-methoxy-anilid
Acetessig-2,5-dimethoxy-anilid
Acetessig-2,5-dimethoxy-4-chlor-anilid
Acetessig-4-acetylamino-anilid
Acetessig-4-benzoylamino-anilid
Bis-acetessig-1,4-phenylendiamid
Bis-acetessig-1,3-phenylendiamid
Bis-acetessig-4,4'-phenylharnstoffdiamid
Bis-acetessig-3,3'-phenylharnstoffdiamid
Bis-acetessig-1,4,2-methylphenylendiamid
Bis-acetessig-1,3,4-methylphenylendiamid

Verwendet man als Kupplungskomponente anstelle der Acetessiganilide die folgenden _{P}yrazolone
1-Phenyl-3-methylpyrazolon (5)
1-o-Toluyl-3-methylpyrazolon (5)
1-p-Toluyl-3-methylpyrazolon (5)
1-(o-Methoxyphenyl)-3-methylpyrazolon (5)
1-(4-Acetylaminophenyl)-3-methylpyrazolon (5)
1-(4-Phenylharnstoff)-bis-3-methylpyrazolon (5)
1-(3-Phenylharnstoff)-bis-3-methylpyrazolon (5)

so erhält man kationische Farbstoffe, die Papier in gelben Farbtönen färben (I.Nr. 3-4)..

Verwendet man als Kupplungskomponente Barbitursäure oder 5-Cyaniminobarbitursäure, so werden grünstichig gelbe kationische Farbstoffe erhalten.

### Beispiel 2

Die salzsaure Lösung von 0,1 Mol 2-Amino-naphthalin-5-methyltrimethylammonium-chlorid (etwa 70 Vol. Teile) werden wie in Beispiel 1 beschrieben mit 30 %iger Natriumnitritlösung bei 0° diazotiert.

20,1 Teile (0,1 Mol) 1-Acetylamino-7-hydroxynaphthalin werden in 150 Teilen Wasser und 13 Teilen 40 %iger Natronlauge bei Raumtemperatur gelöst und in eine Vorlage von 100 Teilen Wasser und 35 Teilen 50 %ige Essigsäure gegeben. Die ausgefallene Suspension der Kupplungskomponente wird mit Eis auf 0° gekühlt,.dann läßt man die bereitete Diazoniumsalz-Lösung zulaufen und tropft gleichzeitig 20 %ige Natriumacetatlösung zu, so daß pH 4-4,5 eingehalten wird. Nach beendeter Kupplung wird der ausgefallene Farbstoff durch Filtration isoliert. Die erhaltene Farbstoffpaste wird entweder getrocknet oder durch Lösen mit 150 Teilen 50 %iger Essigsäure eine Farbstofflösung hergestellt.

Der getrocknete Farbstoff löst sich in Wasser mit roter Farbe; Farbstoffpulver bzw. Farbstofflösung ergeben beim üblichen Färben von geleimter oder ungeleimter Papiermasse rote Papierfärbungen (I.Nr. 8). Bei Verwendung des _{S}ulfates der Diazokomponente und Diazotierung in Anwesenheit von Schwefelsäure oder Phosphorsäure werden entsprechende Farbstoffe erhalten. Verwendet man anstelle der obigen Acetylaminonaphthol-Kupplungskomponente die 1-Benzoylamino-, 2-Chlorbenzoylamino-, 2,4-Dichlorbenzoylamino-, die 1-Mesylamino-, Benzolsulfonylamino-, 1-Tosyl- amino-7-hydroxynaphthalin Kupplungskomponente, so erhält man ebenfalls rote Farbstoffe, die Papier in roten Tönen färben.

Verwendet man als Kupplungskomponente ß-Naphthol oder 4-Methyl-1-naphthol, so werden scharlachfarbene kationische Farbstoffe erhalten (I.Nr. 6).

Verwendet man als Kupplungskomponente 1-Hydroxy-3-sulfo-6-amino-(s-triazinyl-(2')-4'-anilino-6'-(3"- dimethylaminopropylenamino))-naphthalin oder die entsprechende -4'-methylanilino- oder -4'-dimethylamino-oder -4'-diethanolamino- oder -4'-morpholino- oder -4'-piperidino- oder -4'-piperazino- oder -4'-hydroxy- oder -aminoethyl-piperazino- oder -4'-hydroxy- oder -4'-amino-oder -4'-chlor- oder -4'-hydrazino- oder -4'-methylamino-oder -4'-ethylamino- oder -4'-o-methylanilino- oder -4'-p-methoxy-anilino- oder -4'-(3"-dimethylaminopropylami- no)-naphthalinverbindung, so erhält man kationische Farbstoffe, die Papier in roten Tönen färben.

### Beispiel 3

_{M}an diazotiert die Lösung von 0,1 Mol 2-Aminonaphthalin-5-methyltrimethylammonium-salz (Chlorid oder Sulfat) wie in Beispiel 1 beschrieben in üblicher Weise bei 0°C mit 30 %iger wäßriger Natriumnittritlösung und erhält eine klare Lösung. Zu dieser Diazoniumsalz-Lösung - mit Amidosulfonsäure nitritfrei gemacht - gibt man bei 0° die Lösung von 13,7 Teilen (0,1 Mol) 2-Methoxy-5-methylanilin in 15 Teilen 21 %iger Salzsäure und 150 Teilen Wasser.

Durch Zutropfen von 20 %iger Natriumacetat-Lösung wird die Kupplung eingeleitet und durch Halten bei pH 2 zu Ende geführt. Man rührt über Nacht und isoliert dann den ausgefallenen Aminoazofarbstoff durch Absaugen. Die erhaltene Farbstoffpaste wird in 1500 Teilen Wasser verrührt und im pH-Bereich von 11 bis 7 Phosgen bei Raumtemperatur eingeleitet. Der sich bildende Harnstoff wird bei pH 7 isoliert. Der erhaltene Farbstoff wird mit 200 Teilen 50 %iger Essigsäure warm gelöst und nach Klärung mit Aktivkohle auf Raumtemperatur abgekühlt. _{M}an erhält eine Farbstofflösung des Farbstoffs der Formel 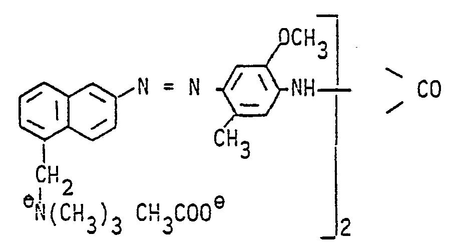 die sich mit Wasser verdünnen läßt (Lösung gelb) und Papiermasse in intensiven rotstichig gelben Tönen (I.Nr. 4) färbt.

Der phosgenierte Farbstoff kann auch als Chlorid oder Zinkchlorid Doppelsalz isoliert und betrocknet werden, um als Farbstoffpulver-Präparation verwendet zu werden.

Verwendet man als Kupplungskomponente anstelle des obigen Kresidins m-Toluidin, so erhält man einen gelben Farbstoff; gelbe Farbstoffe erhält man auch mit o-Anisidin bzw. Anilin, wobei die Kupplung mit den (J-Methansulfonsäuren der Aminokupplungskomponenten durchgeführt wird und die ω-Methansäure-Gruppe nach vollzogener Kupplung in üblicher Weise abgespalten wird.

Setzt man den obigen Aminoazofarbstoff in üblicher Weise mit Cyanurchlorid um, zunächst zum 1:1 Produkt bei 0-5°, dann bei 40° zum 2:1-Produkt, so erhält man den Farbstoff der Formel 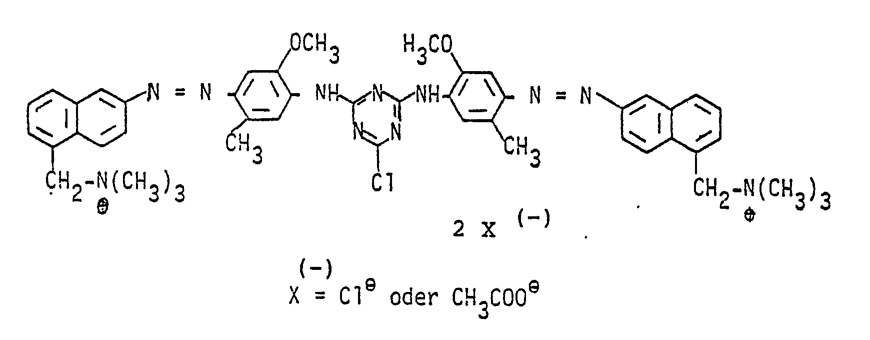 der Papier in rotstichig gelben Tönen färbt. Das Chlor des obigen Triazin-Farbstoffs kann in üblicher Weise bei 80-90° ausgetauscht werden mit Aminen wie Anilin, N-Methylanilin, Ammoniak, Methylamin, Dimethylamin, Ethanolamin, Diethanolamin, Morpholin, Pyridin, N,N-Dimethylpropylendiamin-1,3, N-2-Hydroxyethylpiperazin, N-Methyl-piperazin, N-2-Aminoethylpiperazin.Man erhält rotstichig gelbe Farbstoffe. Entsprechende gelbe Triazin-Farbstoffe erhält man mit den oben angeführten Aminoazoverbindungen mit m-Toluidin, o-Anisidin, Anilin oder Acetyl-m-phenylendiamin oder 3-Aminophenylharnstoff.

## Patentansprüche

1. Kationische Azofarbstoffe der allgemeinen Formel 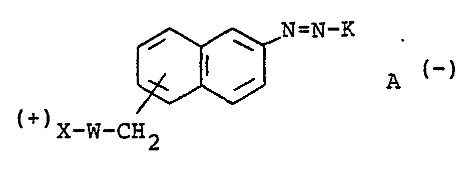 worin
X⁽⁺⁾ eine Ammoniumgruppe,
W eine direkte Bindung oder ein Brückenglied,
K einen Rest einer phenolischen, enolisierten oder enolisierbaren Kupplungskomponente oder einen Rest einer Kupplungskomponente der Aminobenzol- oder Aminonaphthalinreihe und
A⁽⁻⁾ ein Anion bedeuten.

2. Kationische Azofarbstoffe der Formel des Anspruchs 1, worin
X⁽⁺⁾ für eine Ammoniumgruppe der Formel 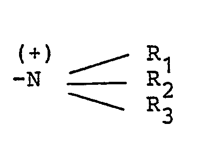 steht, worin
R₁,R₂ und R₃ unabhängig voneinander Wasserstoff, C₁- bis C₄-Alkyl, C₃-oder C₄-Alkenyl, Benzyl oder Phenylethyl, die durch Hydroxy, _{C1}- bis _{C4}-Alkoxy, Halogen oder Cyan und der Benzyl- und Phenylethylrest zusätzlich durch C₁- bis C₄-Alkyl substituiert sein können,
R₁ und R₂ zusammen mit dem Stickstoffatom, an das sie gebunden sind, einen 5- oder 6-gliedrigen Ring, oder
R₁,R₂ und R₃ zusammen mit dem Stickstoffatom, an das sie gebunden sind, einen 6-gliedrigen Ring bedeuten,
W für W₁ steht, das eine direkte Bindung oder ein Brückenglied der Formel 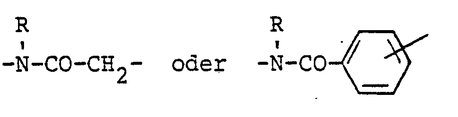 mit R = Wasserstoff oder C₁-C₄-Alkyl darstellt, und
K für K₁ steht, das eine Kupplungskomponente der Hydroxybenzol-, Aminobenzol-, Aminonaphthalin-, Hydroxynaphthalin-, Pyrazolon-, Pyrazol-, Acetessigsäurearylamid- und Pyridon-Reihe darstellt.

3. Kationische Azofarbstoffe gemäß Anspruch 1 der Formel 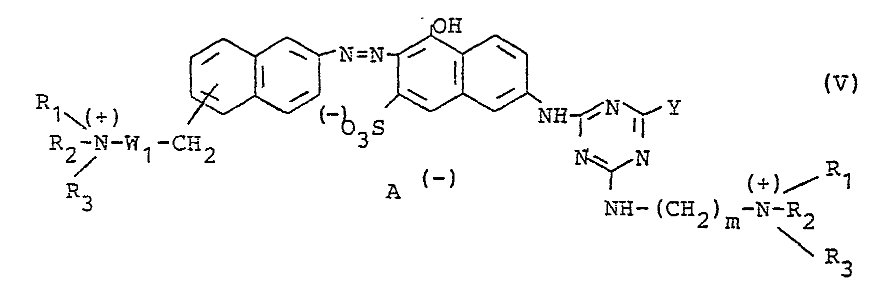 worin
R₁,R₂,R₃,W₁ und A⁽⁻⁾ die in Anspruch 2 angegebene Bedeutung haben,
m für 2 oder 3 und
Y für Halogen, Hydroxy, NR₁R₅ oder 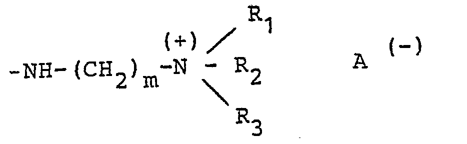 stehen.

4. Kationische Azofarbstoffe gemäß Anspruch 1 der Formel 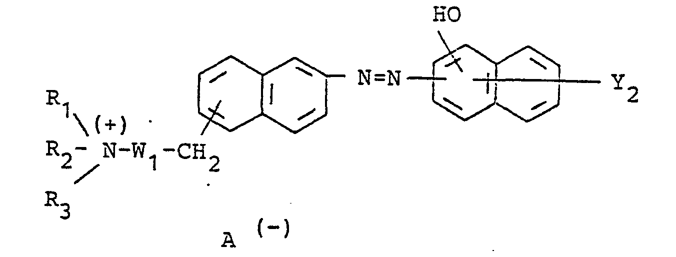 worin die Azo- und Hydroxygruppe in Nachbarstellung zueinander stehen,
Y₂ für Wasserstoff, Acetylamino, gegebenenfalls durch Chlor oder Methyl substituiertes Benzoylamino oder Benzolsulfonylamino oder Mesylamino steht, und
R₁,R₂,R₃,W₁ und A⁽⁻⁾ die in Anspruch 2 angegebene Bedeutung haben.

5. Kationische Azofarbstoffe gemäß Anspruch 1 der Formel 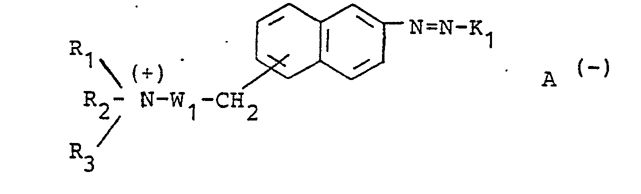 worin
K₁ den Rest einer enolischen Kupplungskomponente der _{A}cetessigsäure-, Pyridon- oder Pyrazolon-Reihe darstellt, und
R₁,R₂,R₃,W₁ und A⁽⁻⁾ die in Anspruch 2 angegebene Bedeutung haben.

6. Kationische Azofarbstoffe gemäß Anspruch 1 der Formel 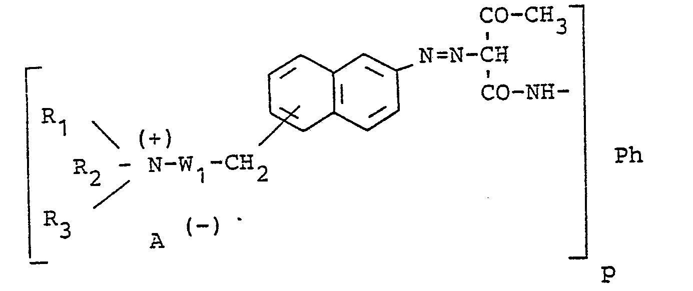
_{Ph} einen gegebenenfalls durch C₁-C₄-Alkyl, C₁-C₄-Alkoxy, Halogen, Acetylamino oder Chloracetylamino substituierten 1- oder 2-wertigen Benzol-, Naphthalin- oder Diphenyl-Rest oder einen Rest der Formel 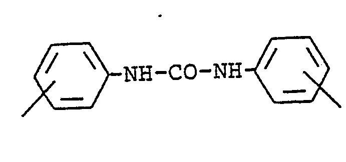 und
p 1 oder 2 darstellt und R₁,R₂,R₃,W₁ und A⁽⁻⁾ die in Anspruch 2 angegebene Bedeutung haben.

7. Kationische Azofarbstoffe gemäß Anspruch 1 der Formel 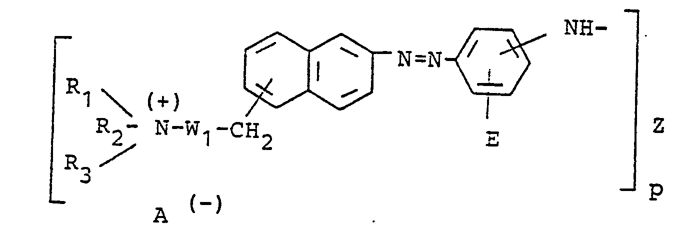 worin
E Wasserstoff, Methyl, Methoxy oder Chlor
p 1 oder 2 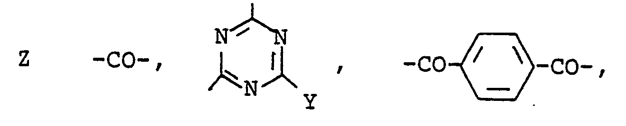 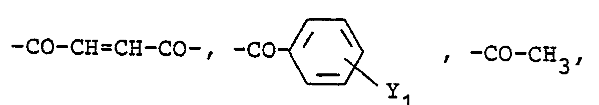 -CO-CH₂-Cl
Y Halogen, Hydroxy, NR₁R₅, NH-(CH₂)ₘ-NR₁R₂R₃
Y₁ Wasserstoff, Halogen, NR₁R₅, NR₁R₂R₃, C₁-C₄-Alkyl, C₁-C₄-Alkoxy bedeuten,
R₅ für R₂ und zusätzlich für gegebenenfalls durch Chlor, C₁-C₄-Alkyl, oder C₁-C₄-Alkoxy substituiertes Phenyl steht, und
R₁,R₂,R₃,W₁ und A die in Anspruch 2 angegebene Bedeutung haben.

8. Verfahren zur Herstellung von kationischen Azofarbstoffen des Anspruchs 1, dadurch gekennzeichnet, daß man Diazoniumverbindungen der Formel 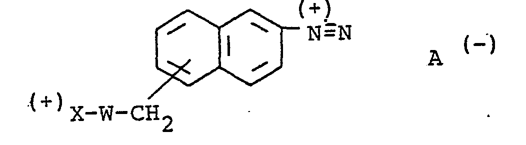 mit Kupplungskomponenten der Formel 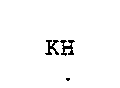 worin X⁽⁺⁾ ,W,A⁽⁻⁾ und K die in Anspruch 1 angegebene Bedeutung haben, umsetzt.

9. Verfahren zum Färben von natürlichen und synthetischen kationisch anfärbbaren Substraten und Massen, dadurch gekennzeichnet, daß man Farbstoffe des Anspruchs 1 verwendet.

₁0. Verfahren zum Färben von Papier in der Masse und in der Oberfläche, dadurch gekennzeichnet, daß man Farbstoffe des Anspruchs 1 verwendet.
